# EUROPEAN PATENT APPLICATION

(11) **EP 2 354 960 A2**
(43) Date of publication of application: **10.08.2011**
(21) Application number: 11150874.3
(22) Date of filing: 13.01.2011
(51) Int. Cl.: G06F 15/02

(54) **E-book device and method for providing information regarding to reading detail**

(30) Priority: 29.01.2010 KR 20100008800
(71) Applicant: SAMSUNG ELECTRONICS CO., LTD., Suwon-si Gyeonggi-do 442-742 (KR)
(72) Inventor: Jang, Jeong-rok, Gyeonggi-do (KR); Yang, Gyung-hye, Seoul (KR); Yoon, Soo-yeoun, Seoul (KR); Jo, Sun-haeng, Gyeonggi-do (KR); Kim, Do-yeon, Gyeonggi-do (KR)
(74) Representative: Davies, Robert Ean

(57) **Abstract**

An electronic book (E-book) device generates and stores a play detail of a played E-book , generates a reading detail based on the stored play detail, and displays the generated reading detail. Thus, a user can acquire the user's reading detail and manage the reading detail.

## Description

### CROSS-REFERENCE TO RELATED APPLICATIONS

This application claims priority from Korean Patent Application No. 10-2010-08800, filed January 29, 2010, in the Korean Intellectual Property Office, the disclosure of which is incorporated herein by reference in its entirety.

### BACKGROUND

### 1. Field

Apparatuses and methods consistent with the exemplary embodiments relate to an electronic book (E-book) device, and more specifically, to an e-book device that plays and displays an E-book.

### 2. Description of the Related Art

To preserve reading detail, such as a history of what books the user has read, users need to separately write and record their reading detail. Otherwise, the users have to rely on their memories for recalling the reading detail.

Recently, E-books are becoming more popular. However, it is quite burdensome and inconvenient for the user to write and manage his/her reading detail in person.

Though some existing applications, for example, content players such as music players or image viewers automatically record and provide a recent content list, but the number of the listed contents is extremely limited. In addition, since the list arranges only the content names, no detailed information relating to the content use is provided.

In this regard, a method for more easily providing the reading detail to the user and for efficiently managing the reading detail is required.

### SUMMARY

Exemplary embodiments overcome the above disadvantages and other disadvantages not described above. Also, exemplary embodiments are not required to overcome the disadvantages described above, and an exemplary embodiment may not overcome any of the problems described above.

Exemplary embodiments provide an e-book device for automatically generating and storing a play detail of an played E-book, generating a reading detail based on the stored play detail, and providing the reading detail to a user, and a method for providing reading detail information.

According to an aspect of an exemplary embodiment, an e-book device includes a storage that stores an E-book; a player that plays the E-book stored to the storage; a graphical user interface (GUI) generator that generates a GUI, the generated GUI including the E-book played by the player; a display that displays the GUI generated by the GUI generator; and a controller that generates a play detail of the E-book played by the player, stores the generated play detail in the storage, generates a reading detail based on the play detail stored in the storage, and controls the GUI generator display the generated reading detail in the GUI.

The play detail may include at least one of a played page of the E-book and a play date and time of the E-book.

The e-book play detail may be generated for each E-book played by the player.

The reading detail may be in the form of a calendar.

The reading detail may include additional information generated based on at least one of the play detail and information relating to the E-book.

The additional information may include at least one of a reading speed and a reading pattern of a user.

The reading detail may include at least one of a book report relating to the E-book and a memo for the E-book.

The e-book device may further include a communicator that sends the reading detail to an external network or an external device.

According to an aspect of another exemplary embodiment, a method for providing reading detail information includes playing an E-book; generating and storing a play detail of the played E-book; generating a reading detail based on the stored play detail; and displaying the generated reading detail.

The play detail may include at least one of a played page of the E-book and a play date and time of the E-book.

The play detail may be generated for each E-book.

The reading detail may be in the form of a calendar.

The reading detail may include additional information generated based on at least one of the play detail and information relating to the E-book.

The additional information may include at least one of a reading speed and a reading pattern of a user.

The reading detail may include at least one of a book report relating to the E-book and a memo for the E-book.

The method may further include sending the reading detail to an external network or an external device.

As set forth above, the play detail of the played E-bookis automatically generated and stored, and the reading detail is generated based on the stored play detail and provided to the user. Thus, the user can acquire his/her reading detail more conveniently and manage the reading detail efficiently.

By referring to the reading detail, the user can easily classify the read E-books and the unread E-books, and thus efficiently manage the e-books. Since the reading detail is automatically generated, the user does not have to write the reading detail.

### BRIEF DESCRIPTION OF THE DRAWINGS

The above and/or other aspects of the present inventive concept will become more apparent by describing certain exemplary embodiments with reference to the accompanying drawings, in which:
FIG. 1 is a front view of an exterior of a dual screen e-book device according to an exemplary embodiment;
FIGS. 2A and 2B illustrate setting a bookmark;
FIGS. 3A and 3B illustrate a process for extracting part of contents of an E-book;
FIGS. 4A and 4B illustrate a function for tearing out part of an E-book;
FIG. 5 illustrates a bookshelf-type E-book list and a desk-type E-book list;
FIG. 6 illustrates an E-book recommendation function;
FIGS. 7A and 7B illustrate a function for inserting and storing a photograph into a page of an E-book;
FIGS. 8A and 8B illustrate an electronic paper display (EPD) displaying screen configuration according to a type of E-book;
FIGS. 9A and 9B illustrate modification of the EPD arrangement;
FIGS. 10A and 10B illustrate a function for highlighting part of the E-book;
FIG. 11 illustrates a translation function;
FIG. 12 illustrates a share note function;
FIG. 13 illustrates an image insert function;
FIG. 14 illustrates a memo insert function;
FIG. 15 illustrates an incorrect answer note provided by the e-book device;
FIG. 16 illustrates a scheduler provided by the e-book device;
FIG. 17 illustrates information regarding to the reading detail;
FIGS. 18A and 18B illustrate a school timetable provided by the e-book device;
FIG. 19 illustrates a multitasking history;
FIG. 20 illustrates a function for adding annotation to a particular phrase of the E-book;
FIGS. 21A and 21B illustrate an image view extension;
FIG. 22 illustrates icons to be selected to instruct to move a focus in the upper part of the EPD;
FIG. 23 illustrates standby screens provided through the EPDs when the e-book device is powered off;
FIG. 24 illustrates the e-book device with drawers displayed in the EPD;
FIG. 25 illustrates an asymmetric dual screen e-book device;
FIGS. 26 and 27 illustrate various uses of the e-book device using a connecting members;
FIG. 28 is a block diagram of the dual screen e-book device;
FIG. 29 is a flowchart of a method for providing the reading detail information according to an exemplary embodiment; and
FIG. 30 is a front view of an exterior of an e-book device according to another exemplary embodiment.

### DETAILED DESCRIPTION OF EXEMPLARY EMBODIMENTS

Exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of the inventive concept. However, the present inventive concept can be practiced without those specifically defined matters. Also, well-known functions or constructions are not described in detail since they would obscure the invention with unnecessary detail.

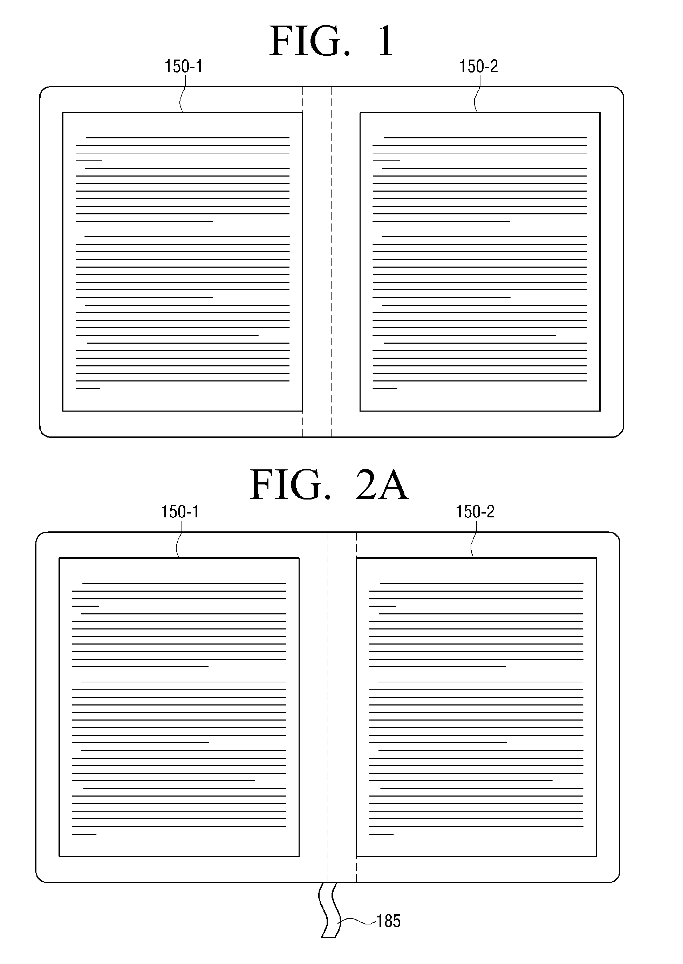

FIG. 1 is a front view of an exterior of a dual screen e-book device according to an exemplary embodiment. As shown in FIG. 1, the dual screen e-book device includes two Electronic Paper Displays (EPDs) 150-1 and 150-2.

The EPDs 150-1 and 150-2 display successive pages of an E-book displayed on the e-book device, respectively. That is, the EPD-1 150-1 displays an n-th page and the EPD-2 150-2 displays an (n+1)-th page. Naturally, the dual screen e-book device displays the E-book in the same manner as a traditional printed book.

Under the EPDs 150-1 and 150-2, touch panels (not shown) are provided. The touch panels can detect a user's manipulation input on surfaces of the EPDs 150-1 and 150-2.

Hereafter, functions of the e-book device are explained in detail.

FIG. 2A depicts the dual screen e-book device including a bookmark string 185 used to set a bookmark. When the user pulls the bookmark string 185 by making an input on the EPD 150-1, 150-2, the dual screen e-book device sets the bookmark in the currently displayed pages of the EPDs 150-1 and 150-2.

In the traditional printed book, only one page of the book may be saved using the bookmark. By contrast, the dual screen e-book device according to an exemplary embodiment does not limit the number of the bookmarks. In addition, the bookmarks set through the dual screen e-book device can be applied to a plurality of E-books. That is, the bookmark can be set in 101-102 pages of a first E-book A, pages 151-152 of a second E-book B, and pages 201-202 pages of a third E-book C.

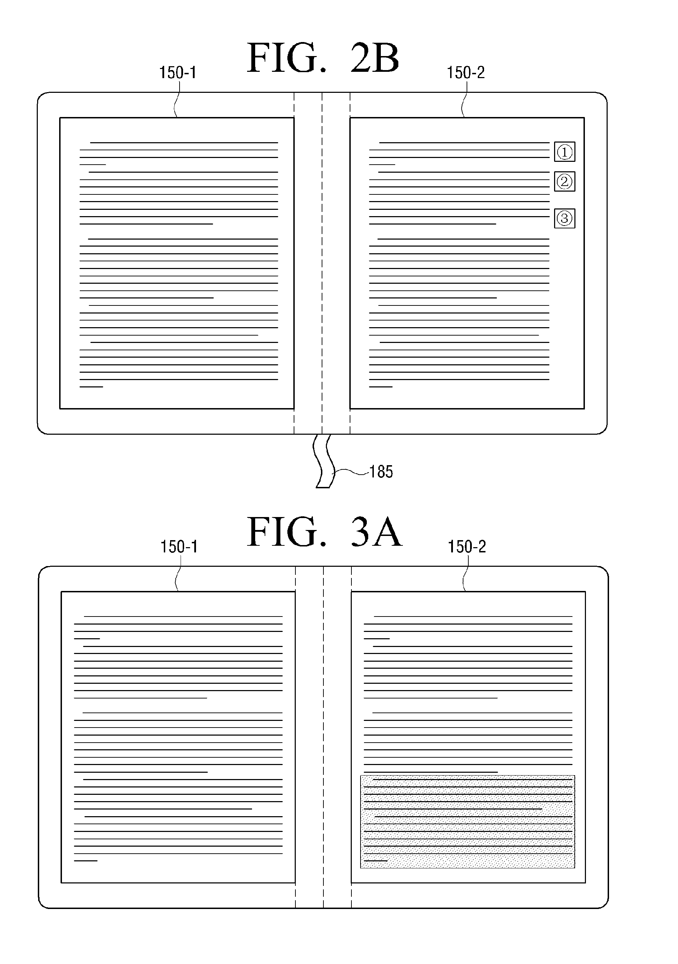

The bookmarks set by the user can be arranged in the right side of the EPD-2 150-2, as shown in FIG. 2B. While the numbers of the bookmarks indicate various bookmarks in FIG. 2B, the bookmarks may be displayed in various forms. For example, the pages of the E-books can be represented.

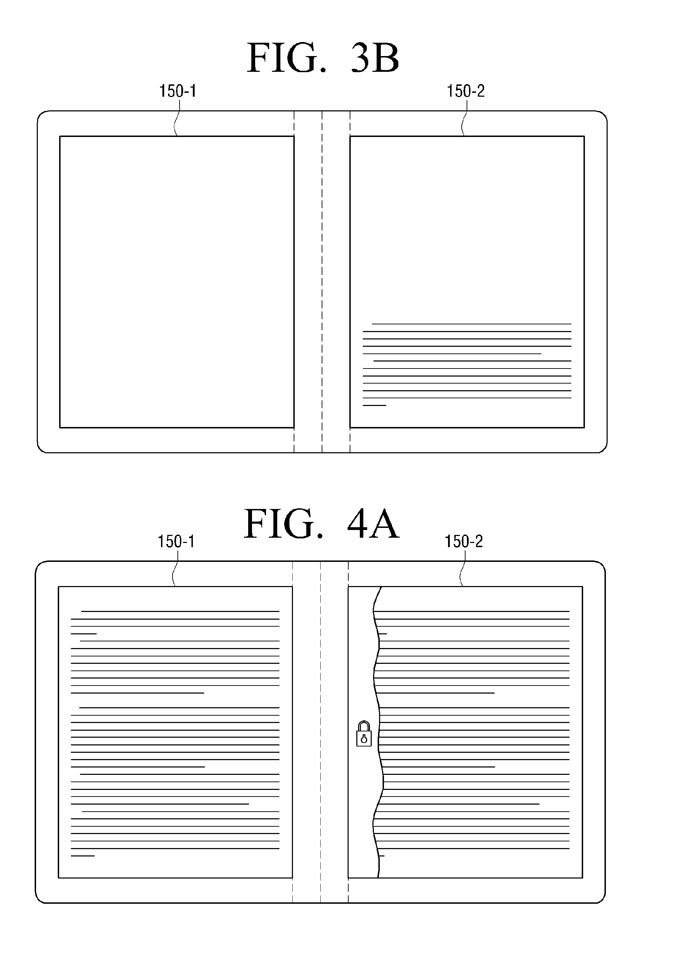

Part of the content of the E-book displayed in the EPDs 150-1 and 150-2 of the e-book device can be extracted. When the user selects part of the content of the E-book using his/her finger or a touch-pen (the shaded area of the EPD-2 150-2 in FIG. 3A indicates the part selected by the user) as shown in FIG. 3A, only the selected part of the E-book by the user is extracted and displayed, as shown in FIG. 3B.

The selected part of the E-book can be stored to the drawers, which will be explained below. That is, the E-book device stores the extracted part of the E-book. The e-book device can store the selected part of the E-book not only as a text file, but also as an image file.

Contents played by the e-book device are not limited to E-books. In addition to E-books, a note pad and a diary can be displayed by the e-book device. Unlike the E-book, a user may wish to set a portion of the note pad and the diary need to be confidential.

To set the confidentiality, the e-book device according to an exemplary embodiment provides a function for tearing off and storing the part of the currently displayed E-book, thereby obscuring a portion of the displayed contents from a user's view. When the user defines part of the to be obscured with the finger or the touch pen, the obscured part is displayed as being omitted from the E-book . The obscured part may be stored in drawers, as shown in FIG. 4A. A lock icon in the EPD-2 150-2 of FIG. 4A indicates that the obscured part is confidentially stored to the drawers.

Besides the note pad and the diary, a part of an E-book also can be partially torn off and separately stored to the drawers. In the printed book, when tearing out a physical page, the opposite side of the printed page is also torn off. By contrast, the e-book device does not remove the opposite side of the torn out page. That is, a front side of a page may be obscured, while a back side of the obscured page may remain displayed in the E-book device.

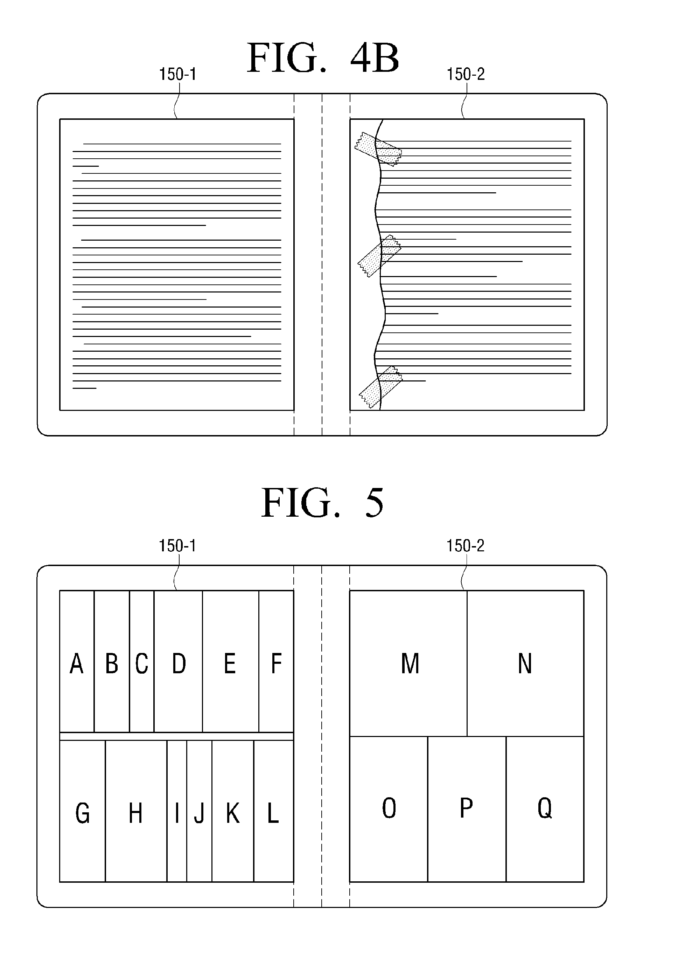

Meanwhile, the torn part of the e-book stored to the drawers can be restored to the original location through the user's manipulation as, shown in FIG. 4B. The restored portion may be displayed as cellophane adhesive tape icons in the EPD-2 150-2, as shown in FIG. 4B, to indicate that the obscured part confidentially stored to the drawers is restored and unsecured.

In FIG. 5, a bookshelf is displayed in the EPD-1 150-1. The E-books on the bookshelf displayed as letters A to L indicate a list of the E-books stored in a memory of the dual screen e-book device.

The EPD-2 150-2 displays some E-books M to Q put on a desk. The E-books on the desk indicate the E-books currently displayed by the dual screen e-book device.

When the user selects one of the e-books on the bookshelf, the selected e-book disappears from the bookshelf and is displayed on the desk. Among the E-books displayed on the desk, the E-book finished by the user disappears from the desk and is displayed on the bookshelf.

When the user selects one of the E-books on the desk, the selected E-book is displayed in the full screen of the EPDs 150-1 and 150-2.

The e-book device has a function for automatically recommending an E-book to the user. The recommended E-book can be determined at random, based on the taste of the user, and the genre of the E-book. In addition, the e-book device can recommend bestsellers of an online bookstore or an online provider.

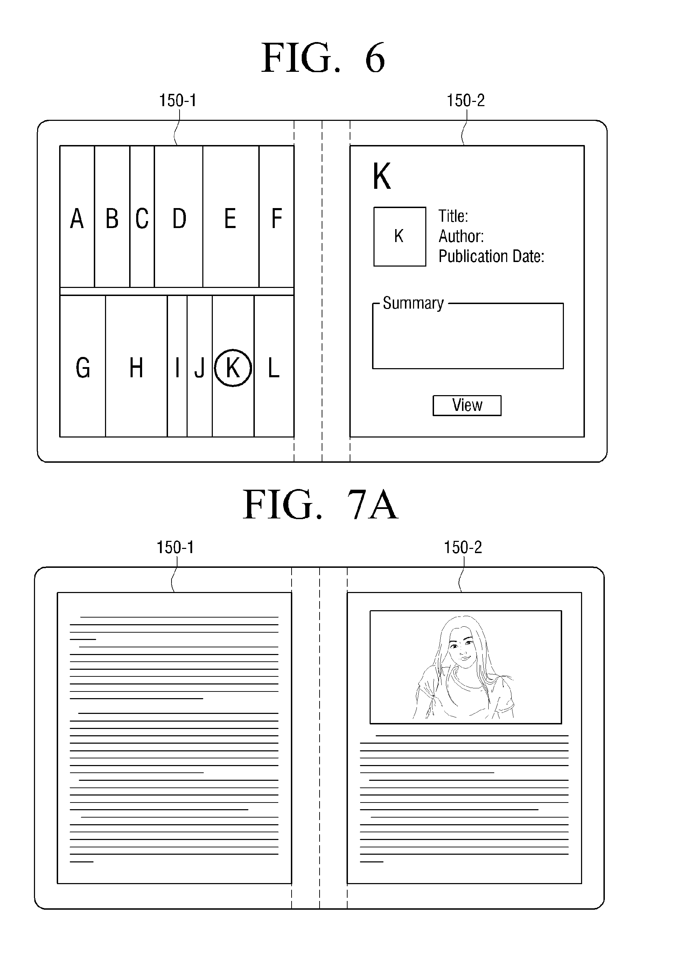

FIG. 6 depicts detailed information of the recommended E-book among the E-book on the bookshelf displayed in the EPD-1 150-1, displayed in the EPD-2 150-2. When the user instructs to the e-book device to display the recommended E-book, the E-book is played and displayed in the EPDs 150-1 and 150-2.

The e-book device provides a function for inserting and storing a photograph into a particular page of the electronic book. The user selects photo to insert and the page of the E-book into which the photo is inserted.

The e-book device links the photo selected by the user with the particular E-book page selected by the user. When the particular page of the E-book is displayed, the photo linked to the particular page overlaps the E-book, as shown in FIG. 7A.

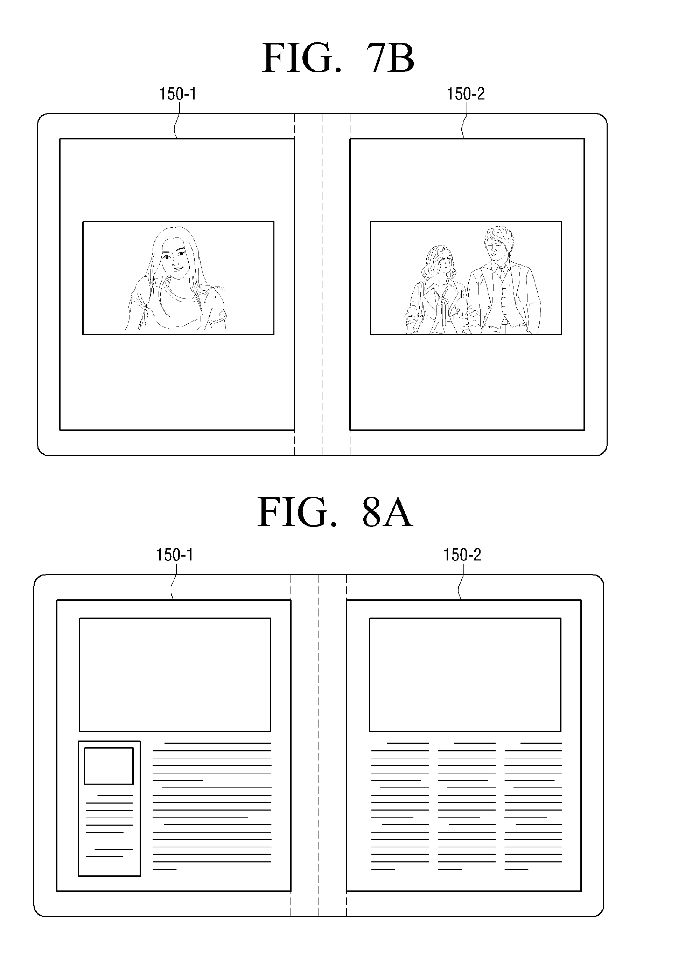

When the user selects the photo, as shown in FIG. 7A, the e-book device executes an image viewer. In response, photos inserted to the particular page of the E-book are displayed in the EPDs 150-1 and 150-2 in order, as shown in FIG. 7B.

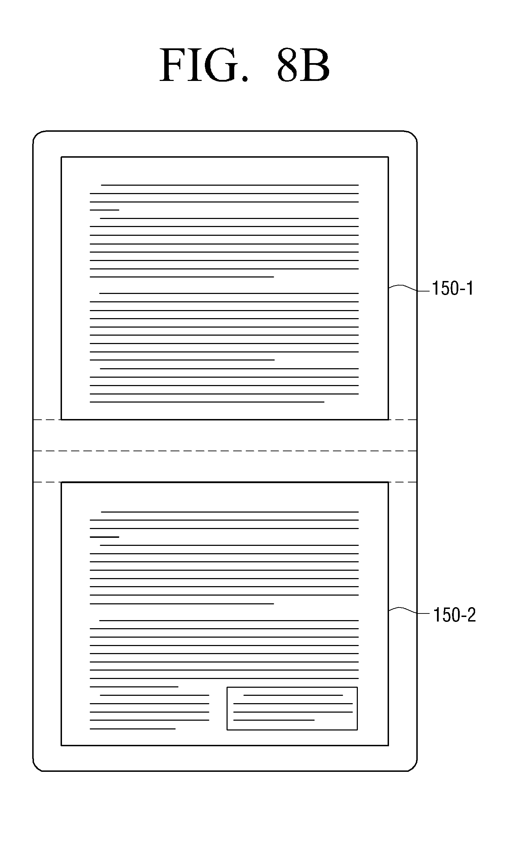

According to the type of the E-book, the dual screen e-book device configures screens displayed in the EPDs 150-1 and 150-2. When the E-book is written in the lateral lines, the e-book is arranged in the EPDs 150-1 and 150-2 to suit the landscape view as shown in FIG. 8A. When the E-book is written in the vertical direction, the e-book is arranged in the EPDs 150-1 and 150-2 to suit the portrait view, as shown in FIG. 8B.

The screen configurations of FIGS. 8A and 8B can be changed automatically based on the type of the E-book, or manually according to the setting of the user.

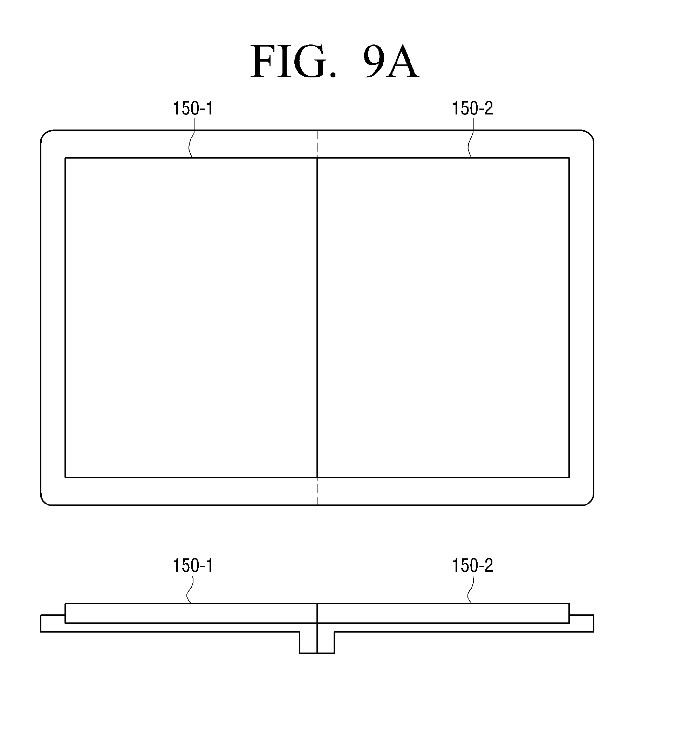

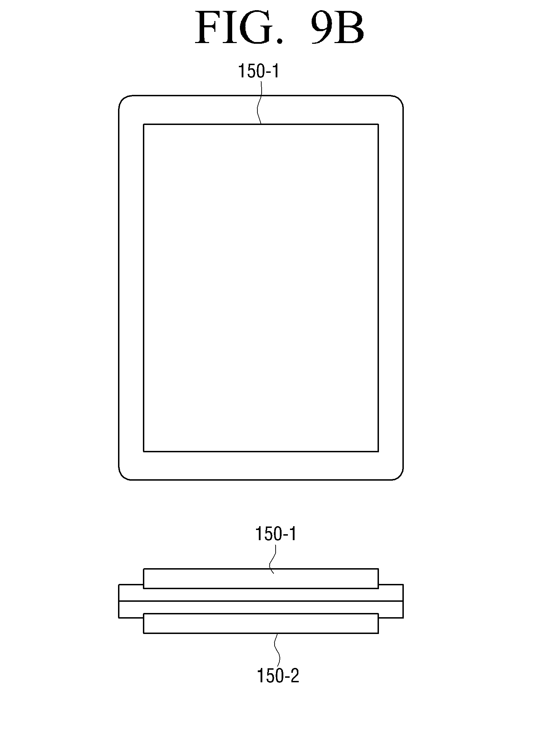

By mechanically manipulating a connecting member disposed at the center of the dual screen e-book device, it is possible to not only reduce the space between the EPDs 150-1 and 150-2, as shown in FIG. 9A, but also make the EPDs 150-1 and 150-2 face the opposite sides, as shown in FIG. 9B.

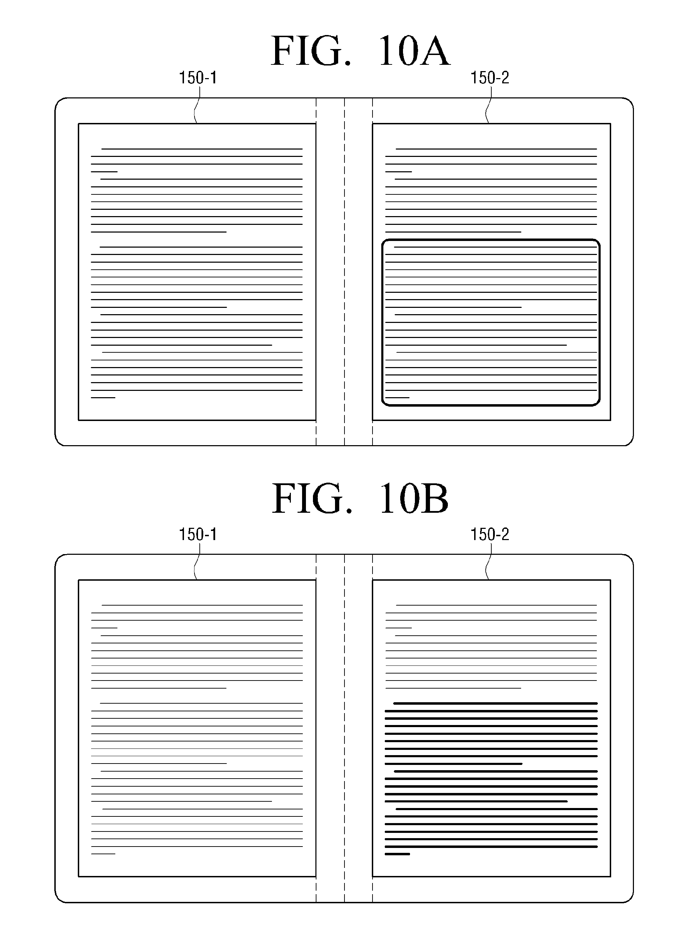

The e-book device provides a function for highlighting a part of the E-book selected by the user. When the user selects a region, as shown in FIG. 10A, the e-book device highlights this region by bold-lettering texts, as shown in FIG. 10B.

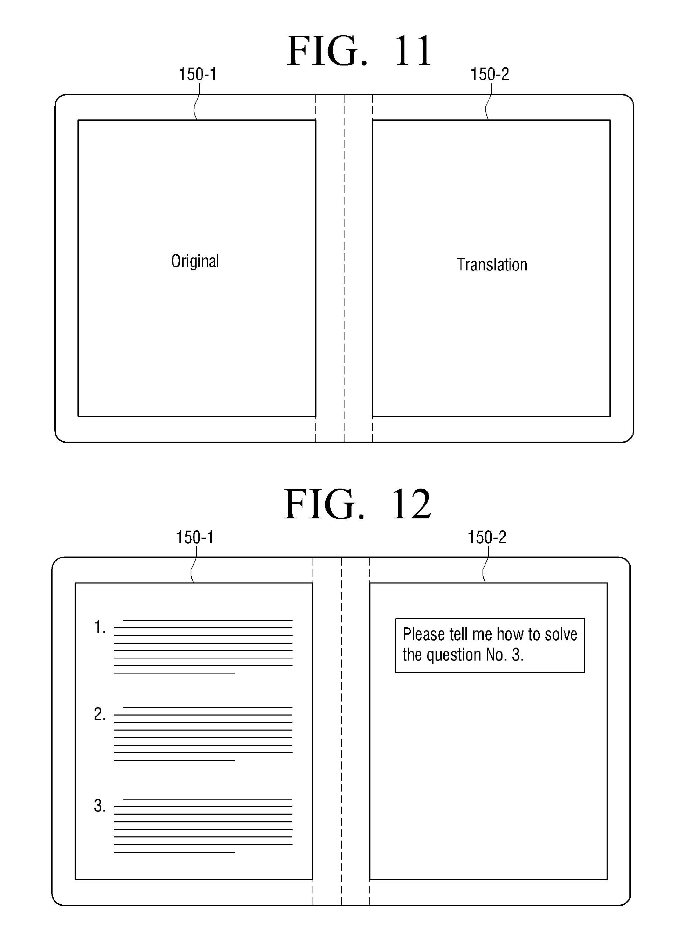

The dual screen e-book device provides a translation function. The dual screen e-book device can provide the original text in the EPD-1 150-1 and provide the translation in the EPD-2 150-2, as shown in FIG. 11.

Since the dual screen e-book device includes the two EPDs 150-1 and 150-2, and the touch panels are disposed under the EPDs 150-1 and 150-2, the user can input a user command by manipulating on the surfaces of the EPDs 150-1 and 150-2.

Accordingly, the e-book device can provide a note function, through the EPD-1 150-1, and a share note function, through the EPD-2 150-2, as shown in FIG. 12.

The share note function sends contents written by the user to another e-book device, receives contents input through the other another e-book device, and displays the received contents in the share note. Using the share note function, it is possible to exchange ideas, questions, and answers with other users.

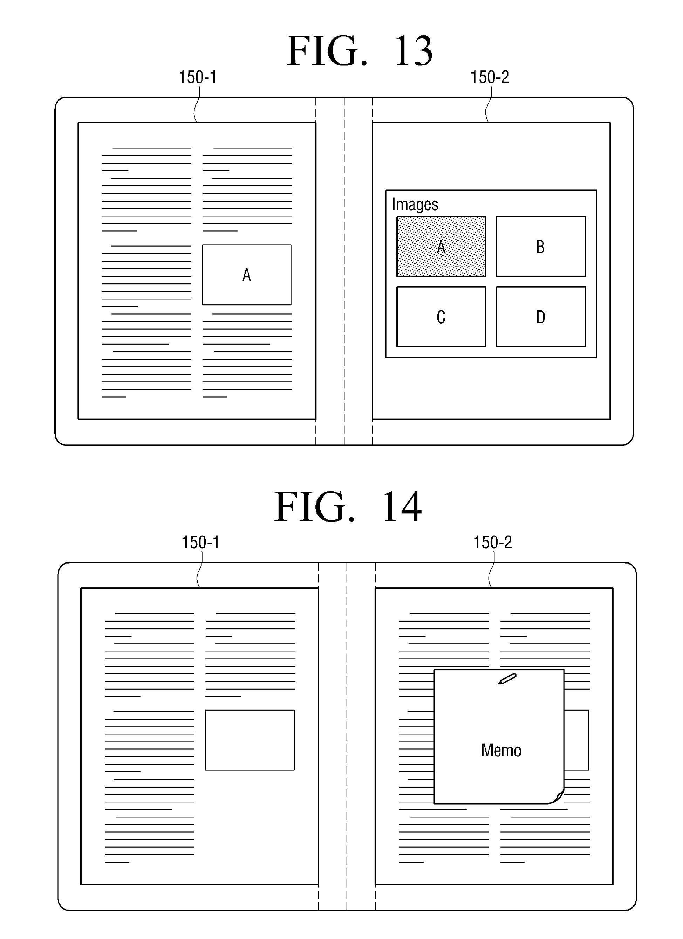

The e-book device enables a user to insert an image into the note provided through the EPDs 150-1 and 150-2. As shown in FIG. 13, it is possible to insert an image selected from a clipboard displayed in the EPD-2 150-2, into the note provided from the EPD-1 150-1. Accordingly, the e-book device links the selected image with the currently displayed note.

The e-book device provides a memo insert function. It is possible to insert the memo into the note provided through the EPDs 150-1 and 150-2, as shown in FIG. 14. For doing so, the e-book device links the memo to the currently displayed note. Notably, the memo can be inserted to not only the note, but also the E-book.

Besides the memo insertion of FIG. 14, the memo written by the user can directly overlap the e-book or the note.

Since the dual screen e-book device can provide the e-book and the note to the user, the e-book device can be used for education. For example, the EPD-1 150-1 can provide a test paper and the EPD-2 150-2 can provide a note.

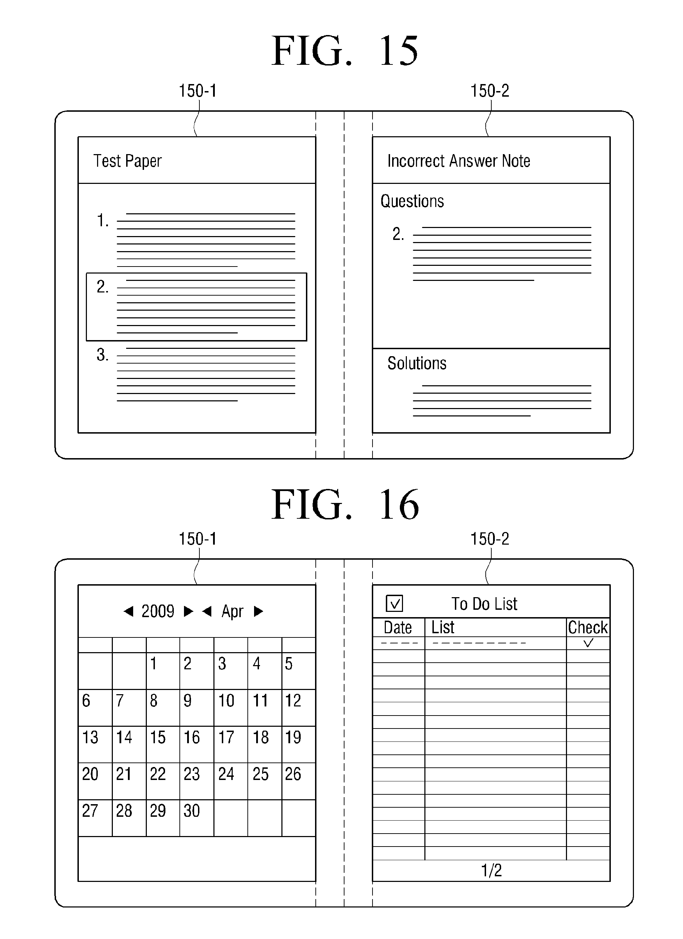

At this time, the note provided through the EPD-2 150-2 can be implemented as an incorrect answer note. A question answered wrong, among the questions in the test paper displayed in the EPD-1 150-1, can be copied to the incorrect answer note of the EPD-2 150-2, as shown in FIG. 15.

The e-book device provides a scheduler for schedule management. FIG. 16 depicts the scheduler provided by the e-book device. The scheduler provides a calendar through the EPD-1 150-1 and a list of jobs to do through the EPD-2 150-2.

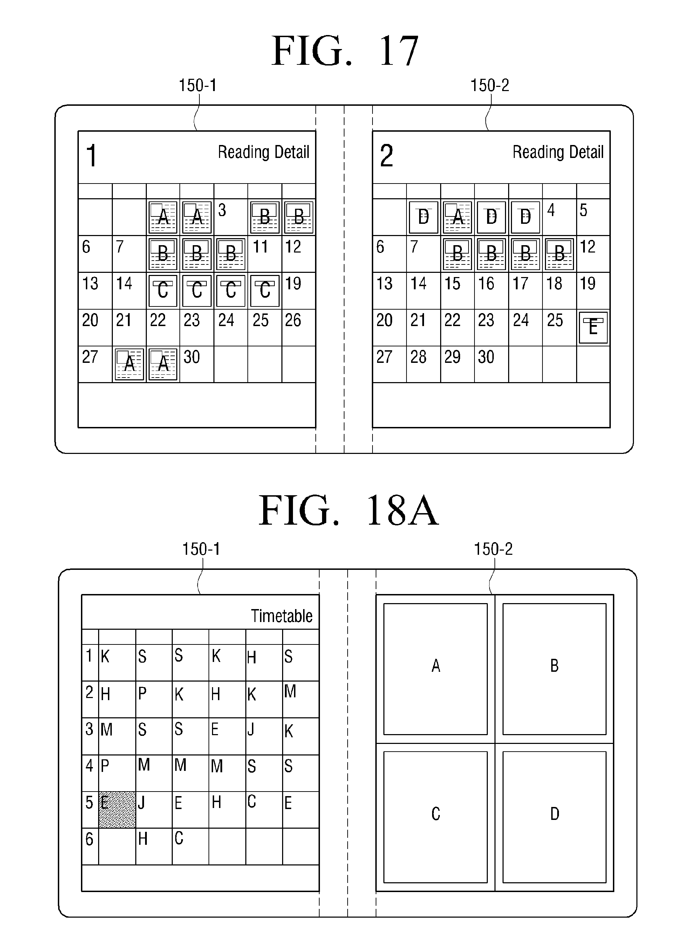

The e-book device provides information regarding to the reading detail to the user. FIG. 17 depicts a reading detail screen generated and displayed as a calendar form. The reading detail indicates history information relating to when and which book the user read in the past. From the reading detail screen of FIG. 17, the user can check when and which book the user has read.

Based on the reading detail, it is possible to determine information as to the reading pattern of the user. For example, the reading speed of the user, the genre distribution, or the writer distribution of the E-books read by the user can be represented statistically and displayed.

The user can select a term for computing the reading detail, and items of the reading detail.

The e-book device can provide a school timetable. FIG. 18A depicts the school timetable provided by the e-book device.

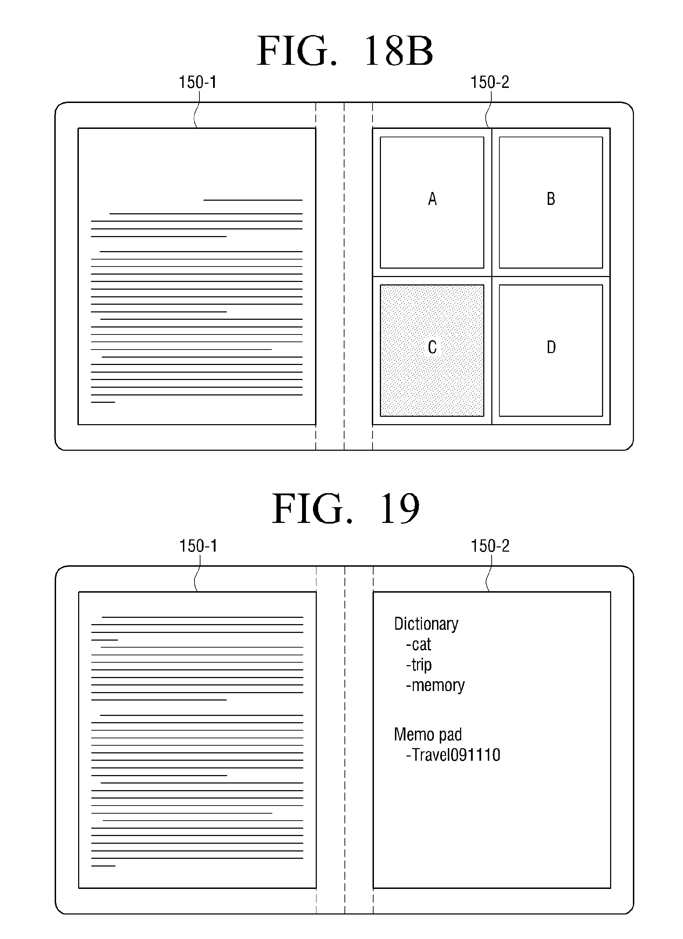

Referring to FIG. 18A, the EPD-1 150-1 displays the school timetable and the EPD-2 150-2 lists textbooks of "English" selected in the school timetable. When one of the textbooks in the EPD-2 150-2 is selected, contents of the selected textbook are displayed in the EPD-1 150-1, as shown in FIG. 18B.

A multitasking history lists previous job results in relation to the page of the currently displayed E-book. In FIG. 19, the multitasking history for the E-book page currently displayed in the EPD-1 150-1 is displayed in the EPD-2 150-2.

The job results in the multitasking history of FIG. 19 include dictionary search results for "cat", "trip", and "memory", and a memo result named "Trave1091110".

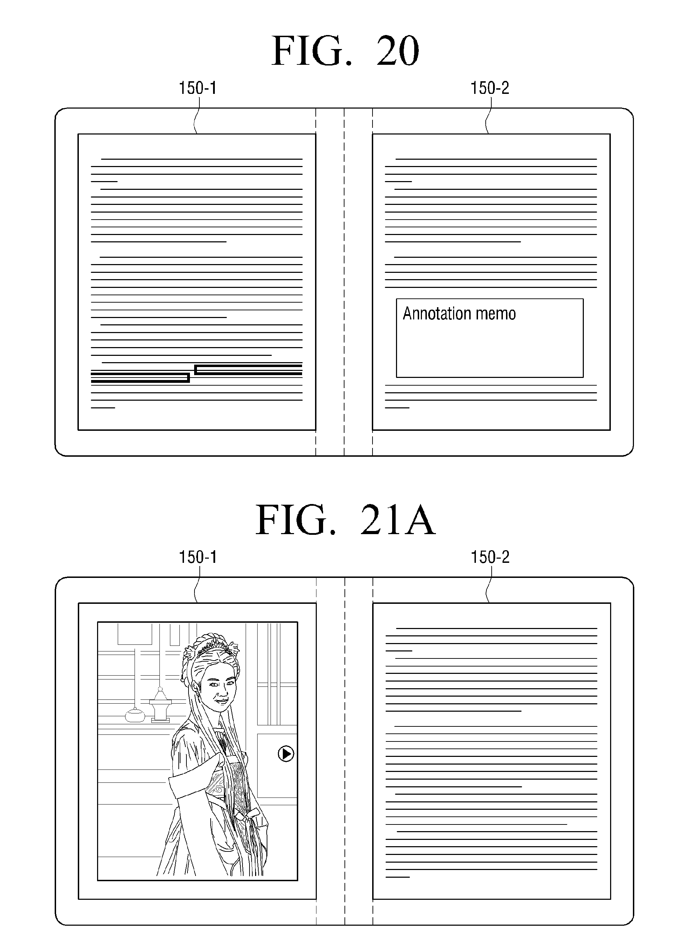

The e-book device provides a function for adding annotation to a particular phrase of the E-book. In FIG. 20, the EPD-2 150-2 displays an annotation memo pad for writing the annotation for a certain phrase highlighted in the E-book displayed in the EPD-1 150-1.

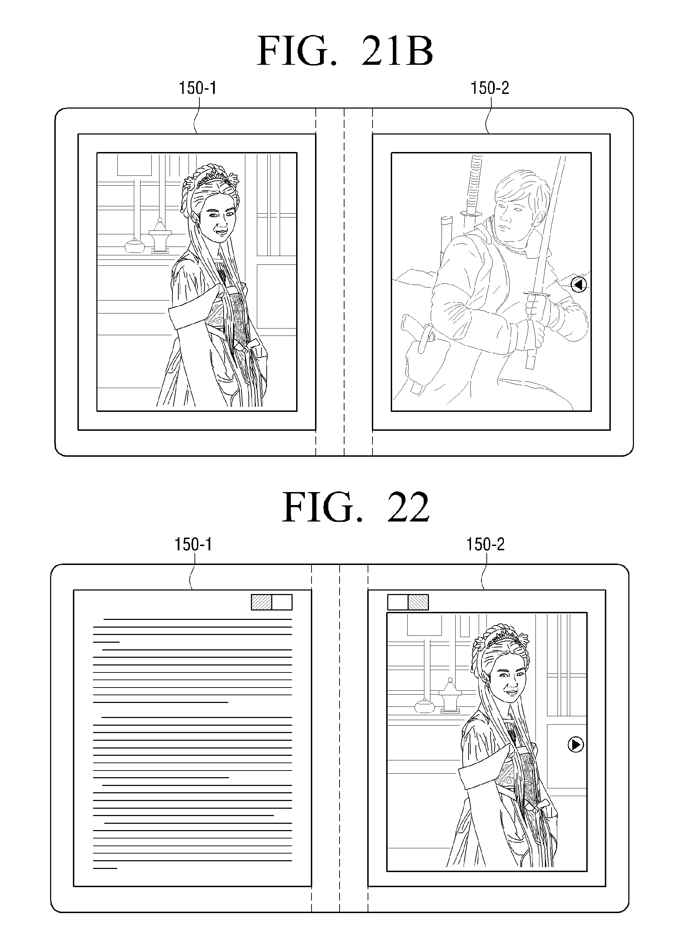

When the EPD-1 150-1 displays an image, the EPD-2 150-2 displays the E-book, and the user selects a "□" icon displayed together with the image in the EPD-1 150-1, as shown in FIG. 21A, the image viewer is extended to the EPD-2 150-2, as shown in FIG. 21B.

When both of the EPD-1 150-1 and the EPD-2 150-2 display images and the user selects a "□" icon displayed together with the image in the EPD-2 150-2, as shown in FIG. 21B, the image viewer disappears from the EPD-2 150-2 and the e-book is displayed, as shown in FIG. 21A.

While the dual screen e-book device includes the two EPDs 150-1 and 150-2, a single focus is preferable. Given the single focus, the focus needs to be shown in only one of the two EPDs 150-1 and 150-2. Hence, a means for selecting the EPD 150-1 or 150-2 for the focus is required.

FIG. 22 illustrates the dual screen e-book device including icons to be selected to instruct to move the focus in the upper part of the EPDs 150-1 and 150-2. When the icon above the EPD-1 150-1 is selected, the focus moves to the EPD-1 150-1. When the icon above the EPD-2 150-2 is selected, the focus moves to the EPD-2 150-2.

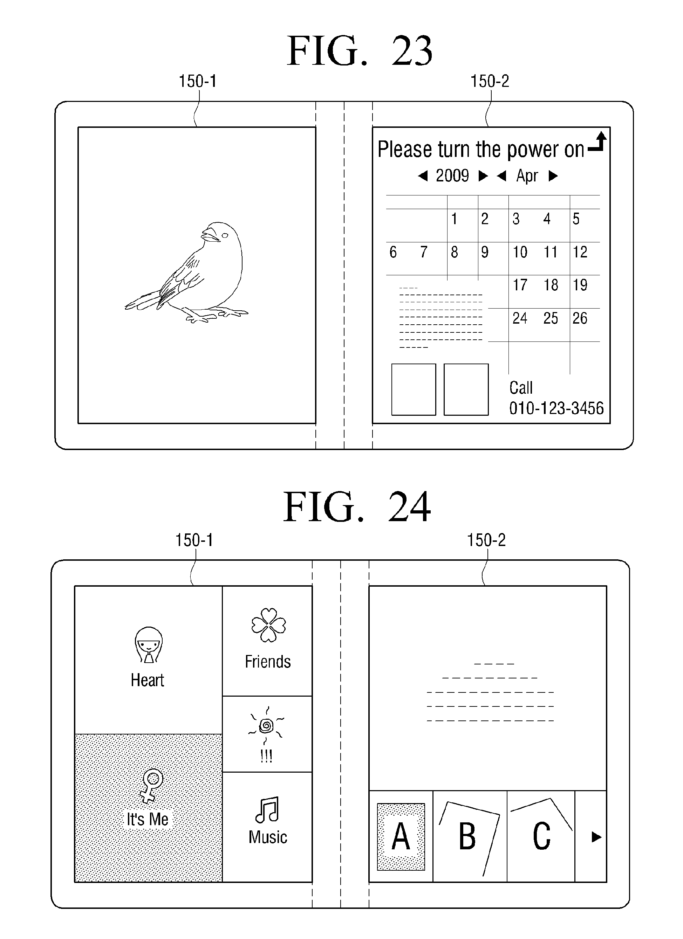

FIG. 23 depicts standby screens provided through the EPDs 150-1 and 150-2 when the e-book device is turned off. The bird illustrated as the standby screens in FIG. 23 are exemplary, and the user can change the configuration for the standby screen to display any image.

FIG. 24 depicts the e-book device displaying the drawers in the EPD-1 150-1. In FIG. 24, the drawers includes a "Heart" drawer, a "It's me" drawer, a "Friends" drawer, a "!!!" drawer, and a "Music" drawer.

Under the EPD-2 150-2, contents stored to the "It's me" drawer, selected from the drawers displayed in the EPD-1 150-1, are arranged. The upper part of the EPD-2 150-2 enlarges and displays the content selected by the user among the contents arranged in the lower part.

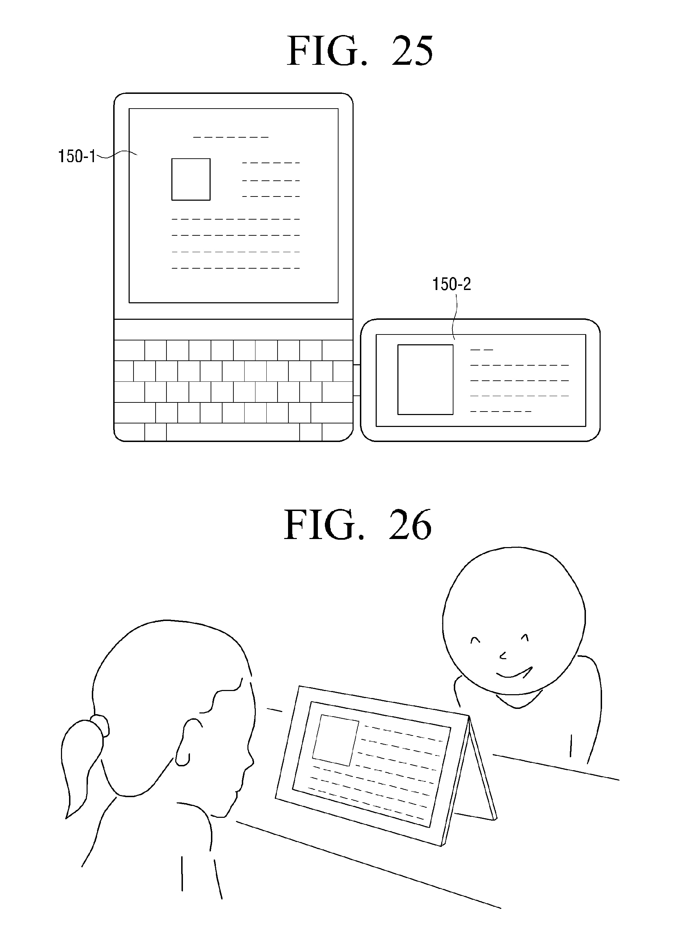

FIG. 25 shows a dual screen e-book device including two asymmetric EPDs 150-1 and 150-2. The two EPDs 150-1 and 150-2 of the dual screen e-book device do not need to be in the same form and may differ from each other, as shown in FIG. 25.

When the EPDs 150-1 and 150-2 of the dual screen e-book device is asymmetric as shown in FIG. 25, the EPD-2 150-2 can be folded over a keyboard under the EPD-1 150-1.

When the connecting member between the EPDs 150-1 and 150-2 of the dual screen e-book device can be bent backward, users facing each other can view the EPDs 150-1 and 150-2 of the dual screen e-book device in their own direction.

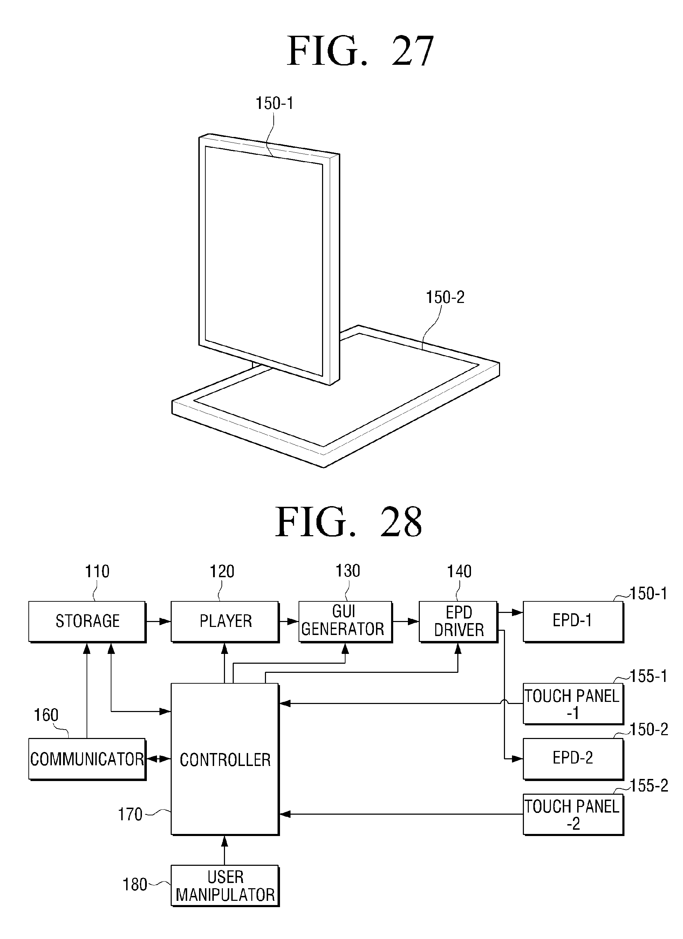

In addition, the connecting member can be implemented to bend and to rotate the EPDs 150-1 and 150-2 of the dual screen e-book device, as shown in FIG. 27.

FIG. 28 is a block diagram of the e-book device. The e-book device includes a storage 110, a player 120, a GUI generator 130, an EPD driver 140, the EPDs 150-1 and 150-2, touch panels 155-1 and 155-2, a communicator 160, a controller 170, and a user manipulator 180 as shown in FIG. 28.

The storage 110 provides a storage space for storing the contents. The storage 110 includes not only an embedded storage device, such as a read only memory (ROM), random access memory (RAM), of flash memory, but also a detachable storage device, such as an external universal serial bus (USB) device. The contents stored to the storage 110 include still images and videos as well as the E-books.

The player 120 plays the contents stored to the storage 110. When the compressed content is stored to the storage 110, the player 120 decompresses the compressed content.

The GUI generator 130 generates a GUI and adds the generated GUI to the content output from the player 120. The GUI generation of the GUI generator 130 is controlled by the controller 170.

The EPD driver 140 divides and displays the GUI-added content output from the GUI generator 130 in the EPDs 150-1 and 150-2.

The touch panels 155-1 and 155-2 are disposed below the EPDs 150-1 and 150-2 as mentioned earlier, to detect the user manipulation input through the EPDs 150-1 and 150-2. The touch panels 155-1 and 155-2 forward the detected user manipulation to the controller 170.

The communicator 160 is connected with an external device or an external network to communicate. The user manipulator 180 is a physical means for receiving the user command. Manipulation buttons in a casing of the e-book device correspond to the user manipulator 180.

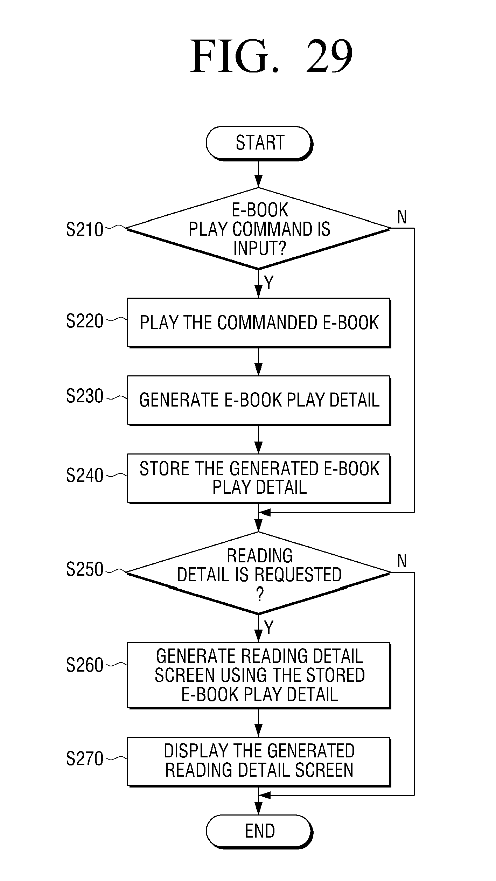

The controller 170 controls the e-book device according to the user command input through the touch panels 155-1 and 155-2 and the user manipulator 180. The controller 170 may be a central processing unit (CPU). In particular, the controller 170 stores the E-book play detail, generates the reading detail screen using the stored E-book play delay, and provides the generated reading detail screen to the user, which is now explained in detail by referring to FIG. 29.

FIG. 29 is a flowchart of a method for providing the reading detail information according to an exemplary embodiment.

When the E-book play command is input from the user (S210-Y), the controller 170 controls the player 120 and the EPD driver 140 to play and display the requested E-book in the EPDs 150-1 and 150-2 (S220). Thus, the E-book is displayed so that the user can read the E-book.

In the process of S220, the controller 170 generates the E-book play detail (S230) and stores the generated E-book play detail to the storage 110 (S240).

The e-book play detail includes information relating to the played pages and information relating the time at which the E-book is accessed and displayed. The e-book play detail is generated for each E-book and stored in the storage 110 of the E-book.

When the user requests the reading detail screen (S250-Y), the controller 170 generates the reading detail screen using the E-book play detail stored to the storage 110 (S260).

Next, the controller 170 controls the GUI generator 130 to display the generated reading detail screen in the EPDs 150-1 and 150-2 as the GUI (S270).

Referring back to FIG. 17, the reading detail screen generated in S260 and displayed in S270 is shown. Information relating to when and which books the user read are represented in FIG. 17. In FIG. 17, the user read the E-book A on January 1 and 2, read the E-book B on January 4, 5, 8 □ 10, ..., and read the E-book E on February 26.

The reading detail screen in FIG. 17 is the calendar type by way of example. The reading detail screen can be generated and displayed in other various forms other than the calendar.

While only one E-book is read each day in the reading detail screen of FIG. 17, the reading of two or more E-books per day can be configured. While the reading detail screen represents only the reading date (that is, the E-book play date) by way of example, the reading time at which the E-book is read can be represented as well.

The reading detail screen can be implemented to provide E-book purchase information. The e-book purchase information includes an E-book cost, a book shop, a discount rate, and so on.

The reading detail screen can further provide additional information generated based on the reading detail of the user. For example, based on the genre and the author of the E-book read by the user (that is, the played E-book), information relating to the reading pattern of the user can be provided.

In addition, the reading detail screen can classify the reading speed of the user based on the E-book , the chapters, or the dates. Since the storage 110 contains the information relating to the played page and the information relating to the play date, the controller 170 can calculate the reading speed of the user using the information stored to the storage 110.

The reading detail screen can be implemented to provide a book report or a memo for the E-book .

The controller 170 can transfer the reading detail information to the external network, the external device, and a blog mail via the communicator 160. Thus, other users can share the reading detail information generated by the e-book device. The reading detail may be provided to contents providers to use as marketing materials.

So far, while the E-book is played, the E-book corresponds to a kind of the contents. Note that contents other than the e-book can be displayed by the e-book device.

While the e-book device uses the two EPDs by way of example, the e-book device can include one EPD and one LCD (or touch screen), or two LCDs (or touch screens).

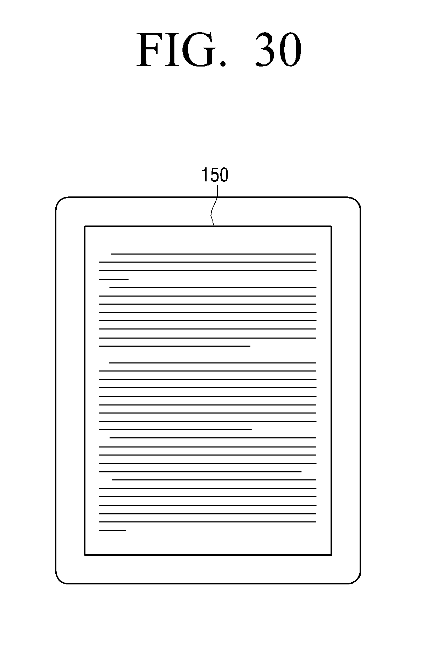

The e-book device can include only one display as shown in FIG. 30. Among the functions of the e-book device as stated above, the functions executable using the single display can be applied to the e-book including the single display as shown in FIG. 30.

The foregoing exemplary embodiments and advantages are merely exemplary and are not to be construed as limiting the present inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. An electronic book (E-book) device comprising:
a storage that stores an E-book ;
a player that plays the E-book stored to the storage;
a graphical user interface (GUI) generator that generates a GUI, including the E-book played by the player;
a display that displays the GUI generated by the GUI generator; and
a controller that generates a play detail of the E-book played by the player, stores the generated play detail in the storage, generates a reading detail based on the play detail stored in the storage, and controls the GUI generator display the generated reading detail in the GUI.

2. The e-book device of claim 1, wherein the play detail comprises at least one of a played page of the E-book and a play date and time of the E-book.

3. The e-book device of claim 2, wherein the play detail is generated for each E-book played by the player.

4. The e-book device of one of claims 1 to 3, wherein the reading detail is in the form of a calendar.

5. The e-book device of one of claims 1 to 4, wherein the reading detail comprises additional information generated based on at least one of the play detail and information relating to the E-book .

6. The e-book device of claim 5, wherein the additional information comprises at least one of a reading speed and a reading pattern of a user.

7. The e-book device of one of claims 1 to 6, wherein the reading detail comprises at least one of a book report relating to the E-book and a memo for the E-book .

8. The e-book device of one of claims 1 to 7, further comprising:
a communicator that sends the reading detail to an external network or an external device.

9. A method for providing reading detail information comprising:
playing an E-book ;
generating and storing a play detail of the played E-book ;
generating a reading detail based on the stored play detail; and
displaying the generated reading detail.

10. The method of claim 9, wherein the play detail comprises at least one of a played page of the E-book and a play date and time of the E-book.

11. The method of claim 10, wherein the play detail is generated for each E-book.

12. The method of one of claims 9 to 11, wherein the reading detail is in the form of a calendar.

13. The method of one of claims 9 to 12, wherein the reading detail comprises additional information generated based on at least one of the play detail and information relating to the E-book .

14. The method of claim 13, wherein the additional information comprises at least one of a reading speed and a reading pattern of a user.

15. The method of one of claims 9 to 14, wherein the reading detail comprises at least one of a book report relating to the E-book and a memo for the E-book .
